# EUROPÄISCHE PATENTANMELDUNG

(11) **EP 2 017 497 A1**
(43) Veröffentlichungstag der Anmeldung: **21.01.2009**
(21) Anmeldenummer: 07110657.9
(22) Anmeldetag: 20.06.2007
(51) Int. Cl.: F16F 15/131, F02N 11/02

(54) **Verfahren zum Starten einer mit einem geteilten Schwungrad ausgestatteten Brennkraftmaschine und Brennkraftmaschine zur Durchführung eines derartigen Verfahrens**

(71) Anmelder: Ford Global Technologies, LLC, Dearborn, MI 48126 (US)
(72) Erfinder: Kramer, Ulrich, Dr., 51429 Bergisch Gladbach (DE); Hohenboeken, Kay, 50733, Koeln (DE)
(74) Vertreter: Drömer, Hans-Carsten

(57) **Zusammenfassung**

Die Erfindung betrifft ein Verfahren zum Starten einer mit einem geteilten, mindestens zwei Massen (2, 3) aufweisenden Schwungrad (1) ausgestatteten Brennkraftmaschine, wobei das Schwungrad (1) eine drehfest mit der Kurbelwelle (4) der Brennkraftmaschine verbundene primäre Schwungradmasse (2) und eine gegen den Widerstand einer Energiespeichereinrichtung gegenüber der primären Schwungradmasse (2) verdrehbare sekundäre Schwungradmasse (3) aufweist, bei dem
■ zum Starten der Brennkraftmaschine eine Startvorrichtung (5) aktiviert wird, wobei die Startvorrichtung (5) mit dem Schwungrad (1) in der Weise in Eingriff gebracht wird, daß beim Starten das Schwungrad (1) und die mit der primären Schwungradmasse (2) verbundene Kurbelwelle (4) in Drehung versetzt werden.

Des weiteren betrifft die Erfindung eine Brennkraftmaschine zur Durchführung eines derartigen Verfahrens.

Es soll ein Verfahren der oben genannten Art aufgezeigt werden, mit dem die nach dem Stand der Technik bekannten Nachteile überwunden werden, wobei insbesondere eine Verkürzung der Startzeit erzielt werden soll.

Erreicht wird dies durch ein Verfahren der oben genannten Art, das dadurch gekennzeichnet ist, daß
■ beim Starten der Brennkraftmaschine die mindestens zwei Schwungradmassen (2, 3) des geteilten Schwungrades (1) mittels einer Mitnehmereinrichtung (10) drehfest miteinander verbunden d. h. gekoppelt werden.

## Beschreibung

Die Erfindung betrifft ein Verfahren zum Starten einer mit einem geteilten, mindestens zwei Massen aufweisenden Schwungrad ausgestatteten Brennkraftmaschine, wobei das Schwungrad eine drehfest mit der Kurbelwelle der Brennkraftmaschine verbundene primäre Schwungradmasse und eine gegen den Widerstand einer Energiespeichereinrichtung gegenüber der primären Schwungradmasse verdrehbare sekundäre Schwungradmasse aufweist, bei dem zum Starten der Brennkraftmaschine eine Startvorrichtung aktiviert wird, wobei die Startvorrichtung mit dem Schwungrad in der Weise in Eingriff gebracht wird, daß beim Starten das Schwungrad und die mit der primären Schwungradmasse verbundene Kurbelwelle in Drehung versetzt werden.

Des weiteren betrifft die Erfindung eine Brennkraftmaschine zur Durchführung eines derartigen Verfahrens, nämlich eine Brennkraftmaschine mit einem geteilten, mindestens zwei Massen aufweisenden Schwungrad, welches eine drehfest mit der Kurbelwelle der Brennkraftmaschine verbundene primäre Schwungradmasse und eine gegen den Widerstand einer Energiespeichereinrichtung gegenüber der primären Schwungradmasse verdrehbare sekundäre Schwungradmasse aufweist, wobei eine Startvorrichtung vorgesehen ist, die mit dem Schwungrad in Eingriff bringbar ist, um das Schwungrad und die Kurbelwelle in Drehung zu versetzen.

Die Kurbelwelle einer Brennkraftmaschine nimmt die Pleuelstangenkräfte auf, die sich aus den Gaskräften infolge der Kraftstoffverbrennung im Brennraum und den Massenkräften infolge der ungleichförmigen Bewegung der Triebwerksteile zusammensetzen. Dabei bildet die Kurbelwelle zusammen mit den an sie angelenkten Bauteilen ein schwingungsfähiges System, welches durch die ungleichförmige Belastung zu Drehschwingungen angeregt wird. Diese Drehschwingungen führen zu Drehzahlschwankungen der Kurbelwelle und zu einer unerwünschten Geräuschentwicklung im Antriebsstrang der Brennkraftmaschine.

Um die Drehschwingungen zu dämpfen, können Drehschwingungsdämpfer vorgesehen werden, die üblicherweise am freien Ende der Kurbelwelle angeordnet werden. Durch die Relativbewegung der Masse des Schwingungsdämpfers zur Kurbelwelle wird ein Teil der Drehschwingungsenergie durch Reibungsarbeit abgebaut.

Um die Drehzahlschwankungen zu mindern, wird nach dem Stand der Technik zudem ein Schwungrad auf der Kurbelwelle angeordnet, um die Masse des schwingungsfähigen Systems zu erhöhen. Die größere Masse führt zu einer größeren Trägheit, weshalb die Drehbewegung der Kurbelwelle gleichförmiger wird. Das Schwungrad speichert Energie und gibt diese bei sinkender Drehzahl an die Kurbelwelle ab. D. h. das als Energiereservoir dienende Schwungrad gibt Energie an die Kurbelwelle ab, sobald es verzögert wird, und wirkt damit der Verzögerung entgegen. Bei steigender Belastung, beispielsweise beim Befahren einer Steigung, fällt die Leistung in der Regel relativ verzögerungsfrei ab. Das Schwungrad wirkt dem Leistungsabfall durch Abgabe von Energie entgegen. Auf diese Weise wirkt das Schwungrad sowohl bei Beschleunigungen als auch bei Verzögerungen für einen ruhigen d. h. gleichförmigeren Lauf der Kurbelwelle und der mit der Kurbelwelle gekoppelten Bauteile.

Das Schwungrad kann als geteiltes Schwungrad, insbesondere als Zweimassen-Schwungrad, ausgebildet werden und dann zusätzlich die Funktion eines Schwingungsdämpfers übernehmen, welcher die Drehschwingungen zwischen Kupplung und Antrieb mindert. Dabei wird eine primäre Schwungradmasse des Schwungrades drehfest mit der Kurbelwelle der Brennkraftmaschine verbunden, wobei eine sekundäre Schwungradmasse auf der gegenüberliegenden Seite über die Kupplung mit dem Getriebe verbunden ist.

Die beiden Schwungradmassen sind zur Ausbildung eines Schwingungsdämpfers gegen den Widerstand einer Energiespeichereinrichtung gegeneinander verdrehbar. Hierzu können sie beispielsweise mittels innenliegender Schraubenfedern miteinander verbunden werden.

Ein derartiges geteiltes Schwungrad ist Gegenstand der vorliegenden Erfindung und wird beispielsweise in der EP 1 691 107 A2 beschrieben.

Obwohl ein Schwungrad der beschriebenen Art die oben ausführlich dargelegten Vorteile aufweist, erweist sich die Teilung des Schwungrades aber insbesondere beim Starten der Brennkraftmaschine als nachteilig, da die Übertragung von Schwingungen von der primären Schwungradmasse auf die sekundäre Schwungradmasse und umgekehrt in diesem Betriebszustand der Brennkraftmaschine - bei niedriger und sich schnell ändernder Drehzahl während des Startvorganges - besonders ausgeprägt ist.

Darüber hinaus hat sich gezeigt, daß sich der Startvorgang einer Brennkraftmaschine verlängert, wenn statt einem herkömmlichen einteiligen Schwungrad ein mehrteiliges geteiltes Schwungrad verwendet wird.

Bei einer herkömmlichen Brennkraftmaschine mit einer konventionellen Startvorrichtung, beispielsweise einem Anlasser oder einem ähnlichen Gerät, das geeignet ist, die Kurbelwelle zwangsweise in Drehung zu versetzen, wie beispielsweise ein Elektromotor, wird zum Starten bzw. Neustarten der Brennkraftmaschine die Startvorrichtung aktiviert und die Kurbelwelle in Drehung versetzt. Dabei wird die Startvorrichtung mit dem Schwungrad in Eingriff gebracht.

Hierbei wirkt beispielsweise ein auf der Antriebswelle der Startvorrichtung angeordnetes Zahnrad mit einer auf dem Außenumfang des Schwungrades vorgesehenen Außenverzahnung zusammen. Ist das Schwungrad geteilt, wird die Startvorrichtung nach dem Stand der Technik mit der primären Schwungradmasse in Eingriff gebracht.

Dieser zwangsweise Antrieb der Kurbelwelle wird aufrecht erhalten bis die Brennkraftmaschine mittels Verbrennung des Kraftstoff-Luft-Gemisches die Drehung der Kurbelwelle ohne Startvorrichtung aufrechterhalten kann.

Die beschriebenen Probleme bei Verwendung eines geteilten Schwungrades, nämlich die Verschlechterung des Schwingungsverhaltens beim Startvorgang und die Verlängerung der Startzeit, erlangen zunehmend am Bedeutung, da neue Konzepte zum Betreiben eines Fahrzeuges zur Verbesserung des Kraftstoffverbrauchs vorsehen, die Brennkraftmaschine - statt sie im Leelauf weiter zu betreiben - abzuschalten, wenn kein momentaner Leistungsbedarf besteht. In der Praxis bedeutet dies, daß zumindest bei Fahrzeugstillstand die Brennkraftmaschine ausgeschaltet wird. Ein Anwendungsfall ist der Stopp-and-Go-Verkehr, wie er sich beispielsweise im Stau auf Autobahnen und Landstraßen einstellt. Im innerstädtischen Verkehr ist der Stopp-and-Go-Verkehr infolge der vorhandenen und nicht aufeinander abgestimmten Ampelanlagen nicht mehr die Ausnahme, sondern die Regel. Weitere Anwendungsfälle bieten beschrankte Bahnübergänge und dergleichen.

Problematisch bei den Konzepten, welche zur Verbesserung des Kraftstoffverbrauchs die Brennkraftmaschine bei fehlendem Bedarf abschalten, ist die Notwendigkeit die Brennkraftmaschine wieder zu starten bzw. neu zu starten und zwar unter Inkaufnahme der oben genannten Nachteile.

Um eine Brennkraftmaschine, insbesondere im Hinblick auf den zunehmenden Stopp-and-Go-Verkehr, bedarfsgerecht betreiben zu können d. h. bei fehlendem Bedarf ausschalten zu können, ist es somit erforderlich, den Neustart zu verbessern.

Vor diesem Hintergrund ist es die Aufgabe der vorliegenden Erfindung, ein Verfahren zum Starten einer Brennkraftmaschine nach dem Oberbegriff des Anspruchs 1 aufzuzeigen, mit dem die nach dem Stand der Technik bekannten Nachteile überwunden werden, wobei insbesondere eine Verbesserung des Schwingungsverhaltens und/oder eine Verkürzung der Startzeit erzielt werden soll.

Eine weitere Teilaufgabe der vorliegenden Erfindung ist es, eine Brennkraftmaschine gemäß dem Oberbegriff des Anspruchs 5 zur Durchführung eines derartigen Verfahrens bereitzustellen.

Gelöst wird diese Aufgabe durch ein Verfahren zum Starten einer mit einem geteilten, mindestens zwei Massen aufweisenden Schwungrad ausgestatteten Brennkraftmaschine, wobei das Schwungrad eine drehfest mit der Kurbelwelle der Brennkraftmaschine verbundene primäre Schwungradmasse und eine gegen den Widerstand einer Energiespeichereinrichtung gegenüber der primären Schwungradmasse verdrehbare sekundäre Schwungradmasse aufweist, bei dem
■ zum Starten der Brennkraftmaschine eine Startvorrichtung aktiviert wird, wobei die Startvorrichtung mit dem Schwungrad in der Weise in Eingriff gebracht wird, daß beim Starten das Schwungrad und die mit der primären Schwungradmasse verbundene Kurbelwelle in Drehung versetzt werden,
und das dadurch gekennzeichnet ist, daß
■ beim Starten der Brennkraftmaschine die mindestens zwei Schwungradmassen des geteilten Schwungrades mittels einer Mitnehmereinrichtung drehfest miteinander verbunden d. h. gekoppelt werden.

Im Gegensatz zu dem aus dem Stand der Technik bekannten Startverfahren sind die mindestens zwei Schwungradmassen des geteilten Schwungrades während des Startvorganges nicht gegeneinander verdrehbar. Hierzu wird eine Mitnehmereinrichtung vorgesehen und verwendet, um die mindestens zwei Schwungradmassen während des Startens drehfest miteinander zu verbinden.

Dadurch, daß gemäß dem erfindungsgemäßen Verfahren keine Relativbewegung zwischen den Schwungradmassen zugelassen wird und möglich ist, kann das Schwingungsverhalten deutlich verbessert, insbesondere die Schwingungsamplituden herabgesetzt werden.

Zudem kann die Startzeit verkürzt werden. Anders als bei Verfahren nach dem Stand der Technik, bei denen die sekundäre zweite Schwungradmasse der Beschleunigung der primären Schwungradmasse aufgrund einer Relativbewegung teilweise entgegenwirken kann, wird dieses kontraproduktive Verhalten der sekundären Schwungradmasse bei dem erfindungsgemäß vorgeschlagenen Verfahren unterdrückt d. h. verhindert, indem die Schwungmassen drehfest miteinander gekoppelt werden.

Dies ermöglicht einen schnellen und insbesondere kraftstoffsparenden Neustart, wodurch auch die im Rahmen der Startprozedur generierten Schadstoffmengen vermindert werden. In einem günstigen Szenario kann die Unterstützung des Startvorgangs durch Aufbringung eines externen Drehmoments mittels der Startvorrichtung - beispielsweise einem Anlasser oder einem Starter-Generator - um ein Arbeitspiel verkürzt werden. Durch die Verkürzung der Startzeit wird auch die Fahrdynamik und insbesondere der Fahrkomfort aufgrund der geringeren Geräuschemissionen verbessert.

Mit dem erfindungsgemäßen Verfahren wird somit die der Erfindung zugrunde liegende Aufgabe gelöst, nämlich ein Verfahren aufzuzeigen, mit dem die nach dem Stand der Technik bekannten Nachteile überwunden werden, wobei insbesondere eine Verkürzung der Startzeiten erreicht wird.

Weitere vorteilhafte Ausführungsformen des Verfahrens werden im Zusammenhang mit den Unteransprüchen erörtert.

Vorteilhaft sind Ausführungsformen des Verfahrens, bei denen
■ beim Starten der Brennkraftmaschine die Startvorrichtung als Mitnehmereinrichtung verwendet wird und sowohl mit der primären Schwungradmasse als auch mit der sekundären Schwungradmasse in Eingriff gebracht wird.

Diese Ausführungsform des Verfahrens ist vorteilhaft, weil einem bereits vorhandenen Bauteil, nämlich der Startvorrichtung, zusätzlich die Funktion der Mitnehmereinrichtung zugewiesen wird. Ein zusätzliches Bauteil, nämlich eine separate Mitnehmereinrichtung, ist somit nicht erforderlich, was zum einen die Kosten, insbesondere die Bereitstellungskosten und Herstellungskosten, senkt. Zum anderen führt die Vermeidung zusätzlicher Bauteile auch zu einer Gewichtsersparnis, wodurch das grundsätzliche Ziel, den Kraftstoffverbrauch der Brennkraftmaschine bzw. des Fahrzeuges zu senken, unterstützt wird.

Darüber hinaus zeichnet sich diese Verfahrensvariante durch eine geringere Störanfälligkeit aus im Vergleich zu der Vorgehensweise, bei der eine vergleichsweise komplexe Mitnehmereinrichtung in das geteilte Schwungrad implementiert wird.

Vorteilhaft sind Ausführungsformen des Verfahrens, bei denen
■ als Startvorrichtung ein Anlasser verwendet wird.

Vorteilhaft sind Ausführungsformen des Verfahrens, bei denen
■ als Startvorrichtung ein Starter-Generator verwendet wird.

Die zweite der Erfindung zugrunde liegende Aufgabe wird gelöst durch eine Brennkraftmaschine mit einem geteilten, mindestens zwei Massen aufweisenden Schwungrad, welches eine drehfest mit der Kurbelwelle der Brennkraftmaschine verbundene primäre Schwungradmasse und eine gegen den Widerstand einer Energiespeichereinrichtung gegenüber der primären Schwungradmasse verdrehbare sekundäre Schwungradmasse aufweist, wobei eine Startvorrichtung vorgesehen ist, die mit dem Schwungrad in Eingriff bringbar ist, um das Schwungrad und die Kurbelwelle in Drehung zu versetzen, und die dadurch gekennzeichnet ist, daß eine Mitnehmereinrichtung vorgesehen ist, mit der die mindestens zwei Schwungradmassen des geteilten Schwungrades beim Starten der Brennkraftmaschine drehfest miteinander verbindbar d. h. koppelbar sind.

Das für das erfindungsgemäße Verfahren Gesagte gilt auch für die erfindungsgemäße Brennkraftmaschine.

Vorteilhaft sind Ausführungsformen der Brennkraftmaschine, bei denen die Startvorrichtung als Mitnehmereinrichtung dient und sowohl mit der primären Schwungradmasse als auch mit der sekundären Schwungradmasse in Eingriff bringbar ist.

Vorteilhaft sind dabei Ausführungsformen der Brennkraftmaschine, bei denen die Startvorrichtung eine Starterwelle und ein auf der Starterwelle angeordnetes Zahnrad umfaßt, wobei das Zahnrad beim Starten der Brennkraftmaschine mit einer auf dem Außenumfang der primären Schwungradmasse vorgesehenen Außenverzahnung und mit einer auf dem Außenumfang der sekundären Schwungradmasse vorgesehenen Außenverzahnung in Eingriff bringbar ist.

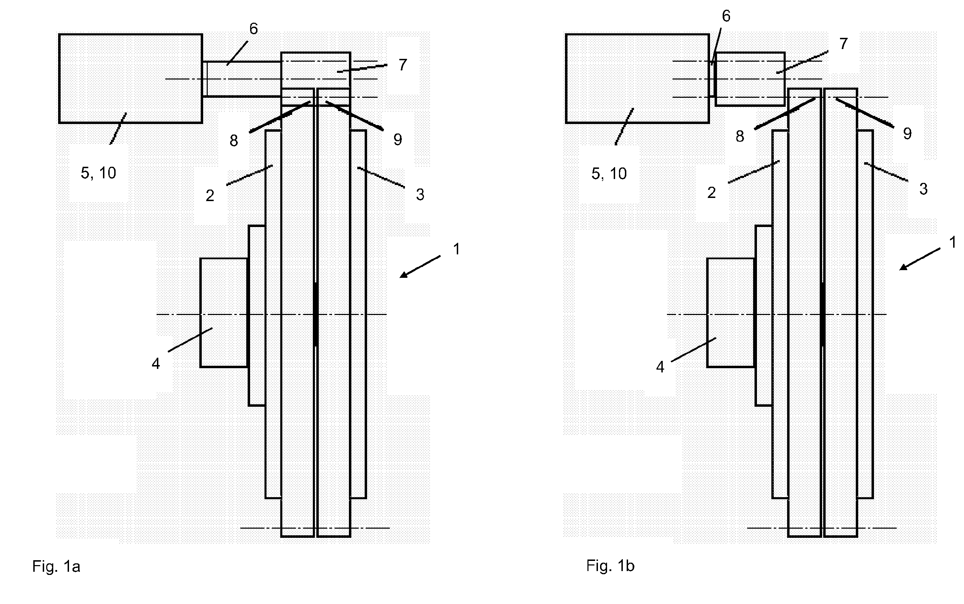

Im folgenden wird die Erfindung anhand eines Ausführungsbeispieles gemäß den Figuren 1a und 1b näher beschrieben. Hierbei zeigen:
- Fig. 1a: in einer schematischen Darstellung das Schwungrad und die Startvorrichtung während des Startvorganges gemäß einer ersten Ausführungsform des Startverfahrens, und
- Fig. 1b: in einer schematischen Darstellung das Schwungrad und die Startvorrichtung nach Beendigung des Startvorganges gemäß der ersten Ausführungsform des Startverfahrens.

Figur 1a zeigt in einer schematischen Darstellung das Schwungrad 1 und die Startvorrichtung 5 während des Startvorganges gemäß einer ersten Ausführungsform des Startverfahrens.

Das Schwungrad 1 ist ein geteiltes Schwungrad 1, welches eine drehfest mit der Kurbelwelle 4 der Brennkraftmaschine verbundene primäre Schwungradmasse 2 und eine gegen den Widerstand einer Energiespeichereinrichtung gegenüber der primären Schwungradmasse 2 verdrehbare sekundäre Schwungradmasse 3 aufweist.

Zum Starten der Brennkraftmaschine ist eine Startvorrichtung 5 vorgesehen, die mit dem Schwungrad 1 in Eingriff bringbar ist und - wie in Figur 1a dargestellt - während des Startens sowohl mit der primären Schwungradmasse 2 als auch mit der sekundären Schwungradmasse 3 in Eingriff steht, um das Schwungrad 1 und die Kurbelwelle 4 in Drehung zu versetzen.

Bei der in Figur 1a dargestellten Variante dient die Startervorrichtung 5 somit gleichzeitig als Mitnehmereinrichtung 10, welche die beiden Schwungradmassen 2, 3 des geteilten Schwungrades 1 beim Starten der Brennkraftmaschine drehfest miteinander verbindet.

Hierzu verfügt die Startvorrichtung 5 über eine Starterwelle 6 und ein auf dieser Starterwelle 6 angeordnetes Zahnrad 7. Zum Starten der Brennkraftmaschine wird das Zahnrad 7 mit einer auf dem Außenumfang der primären Schwungradmasse 2 vorgesehenen Außenverzahnung 8 und mit einer auf dem Außenumfang der sekundären Schwungradmasse 3 vorgesehenen Außenverzahnung 9 in Eingriff gebracht. Auf diese Weise werden die beiden Schwungradmassen 2, 3 drehfest miteinander verbunden, wobei während des Startvorganges beide Schwungradmassen 2, 3 mittels Startvorrichtung 5 in Drehung versetzt werden.

Figur 1b zeigt in einer schematischen Darstellung das Schwungrad 1 und die Startvorrichtung 5 nach Beendigung des Startvorganges gemäß der ersten Ausführungsform des Startverfahrens. Es sollen nur die Unterschiede zu der in Figur 1a dargestellten Momentaufnahme erörtert werden, weshalb im übrigen Bezug genommen wird auf die im Zusammenhang mit Figur 1 a gemachten Ausführungen.

Nach Beendigung des Startvorganges wird die Startvorrichtung 5 deaktiviert, indem die Starterwelle 6 zusammen mit dem Zahnrad 7 translatorisch verschoben d.h. ausgerückt wird, so daß das Zahnrad 7 nicht mehr mit der Außenverzahnung 8 der primären Schwungradmasse 2 und der Außenverzahnung 9 der sekundären Schwungradmasse 3 in Eingriff steht.

### Bezugszeichen

- 1: Schwungrad
- 2: primäre Schwungradmasse
- 3: sekundäre Schwungradmasse
- 4: Kurbelwelle
- 5: Startvorrichtung
- 6: Starterwelle
- 7: Zahnrad
- 8: Außenverzahnung der primären Schwungradmasse
- 9: Außenverzahnung der sekundären Schwungradmasse
- 10: Mitnehmereinrichtung

## Patentansprüche

1. Verfahren zum Starten einer mit einem geteilten, mindestens zwei Massen (2, 3) aufweisenden Schwungrad (1) ausgestatteten Brennkraftmaschine, wobei das Schwungrad (1) eine drehfest mit der Kurbelwelle (4) der Brennkraftmaschine verbundene primäre Schwungradmasse (2) und eine gegen den Widerstand einer Energiespeichereinrichtung gegenüber der primären Schwungradmasse (2) verdrehbare sekundäre Schwungradmasse (3) aufweist, bei dem
■ zum Starten der Brennkraftmaschine eine Startvorrichtung (5) aktiviert wird, wobei die Startvorrichtung (5) mit dem Schwungrad (1) in der Weise in Eingriff gebracht wird, daß beim Starten das Schwungrad (1) und die mit der primären Schwungradmasse (2) verbundene Kurbelwelle (4) in Drehung versetzt werden,
**dadurch gekennzeichnet, daß**
■ beim Starten der Brennkraftmaschine die mindestens zwei Schwungradmassen (2, 3) des geteilten Schwungrades (1) mittels einer Mitnehmereinrichtung (10) drehfest miteinander verbunden d. h. gekoppelt werden.

2. Verfahren nach Anspruch 1,
**dadurch gekennzeichnet, daß**
■ beim Starten der Brennkraftmaschine die Startvorrichtung (5) als Mitnehmereinrichtung (10) verwendet wird und sowohl mit der primären Schwungradmasse (2) als auch mit der sekundären Schwungradmasse (3) in Eingriff gebracht wird.

3. Verfahren nach Anspruch 1 oder 2,
**dadurch gekennzeichnet, daß**
■ als Startvorrichtung (5) ein Anlasser verwendet wird.

4. Verfahren nach Anspruch 1 oder 2,
**dadurch gekennzeichnet, daß**
■ als Startvorrichtung (5) ein Starter-Generator verwendet wird.

5. Brennkraftmaschine zur Durchführung eines Verfahrens nach einem der vorherigen Ansprüche mit einem geteilten, mindestens zwei Massen (2, 3) aufweisenden Schwungrad (1), welches eine drehfest mit der Kurbelwelle (4) der Brennkraftmaschine verbundene primäre Schwungradmasse (2) und eine gegen den Widerstand einer Energiespeichereinrichtung gegenüber der primären Schwungradmasse (2) verdrehbare sekundäre Schwungradmasse (3) aufweist, wobei eine Startvorrichtung (5) vorgesehen ist, die mit dem Schwungrad (1) in Eingriff bringbar ist, um das Schwungrad (1) und die Kurbelwelle (4) in Drehung zu versetzen,
**dadurch gekennzeichnet, daß**
eine Mitnehmereinrichtung (10) vorgesehen ist, mit der die mindestens zwei Schwungradmassen (2, 3) des geteilten Schwungrades (1) beim Starten der Brennkraftmaschine drehfest miteinander verbindbar sind d. h. koppelbar sind.

6. Brennkraftmaschine nach Anspruch 5,
**dadurch gekennzeichnet, daß**
die Startvorrichtung (5) als Mitnehmereinrichtung (10) dient und sowohl mit der primären Schwungradmasse (2) als auch mit der sekundären Schwungradmasse (3) in Eingriff bringbar ist.

7. Brennkraftmaschine nach Anspruch 6,
**dadurch gekennzeichnet, daß**
die Startvorrichtung (5) eine Starterwelle (6) und ein auf der Starterwelle (6) angeordnetes Zahnrad (7) umfaßt, wobei das Zahnrad (7) beim Starten der Brennkraftmaschine mit einer auf dem Außenumfang der primären Schwungradmasse (2) vorgesehenen Außenverzahnung (8) und mit einer auf dem Außenumfang der sekundären Schwungradmasse (3) vorgesehenen Außenverzahnung (9) in Eingriff bringbar ist.
